# EUROPÄISCHE PATENTSCHRIFT

(11) **EP 2 780 422 B1**
(45) Veröffentlichungstag und Bekanntmachung des Hinweises auf die Patenterteilung: **04.03.2020**
(21) Anmeldenummer: 12798635.4
(22) Anmeldetag: 16.11.2012
(51) Int. Cl.: C09C 1/24, C09C 1/30, C09C 1/36, C09C 1/62, C09C 3/00, C09C 3/08, C09C 3/12

(54) **VERFAHREN ZUR HERSTELLUNG VON PARTIKELN MIT HOCHPORÖSER OBERFLÄCHENBESCHICHTUNG**
METHOD FOR PRODUCING PARTICLES WITH HIGHLY POROUS SURFACE COATING
PROCÉDÉ DE FABRICATION DE PARTICULES POURVUES D'UN REVÊTEMENT DE SURFACE TRÈS POREUX

(30) Priorität: 17.11.2011 DE 102011055433
(43) Veröffentlichungstag der Anmeldung: 24.09.2014
(73) Patentinhaber: Karlsruher Institut für Technologie, 76131 Karlsruhe (DE)
(72) Erfinder: WÖLL, Christof, 76185 Karlsruhe (DE); SHEKHAH, Osama, Thuwal 23955-6900 Jeddah (SA); FRANZREB, Matthias, 76185 Karlsruhe (DE); SILVESTRE, Martin, 76137 Karlsruhe (DE)
(74) Vertreter: Fitzner, Uwe
(86) Internationale Anmeldenummer: PCT/EP2012/072812
(87) Internationale Veröffentlichungsnummer: WO 2013/072452

(56) Entgegenhaltungen:
- WO-A1-2011/133999
- GUANG LU, OMAR K. FARHA, LAUREN E. KRENO1, PAUL M. SCHOENECKER, KRISTA S. WALTON, RICHARD P. VAN DUYNE, JOSEPH T. HUPP: "Fabrication of Metal-Organic Framework-Containing Silica-Colloidal Crystals for Vapor Sensing", ADV. MATER., Bd. 23, Nr. 38, 11. Oktober 2011 (2011-10-11), XP002692827, DOI: 10.1002/adma.201102116
- NIAN LIU, YAN YAO, JUDY J. CHA, MATTHEW T. MCDOWELL, YU HAN, AND YI CUI: NANO RES., Bd. 5, Nr. 2, 2012, Seiten 109-116, XP002692828, DOI: 10.1007/s12274-011-0190-1

## Beschreibung

Die vorliegende Erfindung betrifft ein Verfahren zur Herstellung magnetischer Partikel mit MOF-Beschichtung.

### Stand der Technik:

Metallorganische Gerüstverbindungen (englisch: Metal-organic frame works - MOF's) sind hybride anorganisch-organische Feststoffe mit hoher Porösität. Zu ihren herausragenden Eigenschaften zählen hohe Gasspeicherkapazitäten für Wasserstoff und Kohlenwasserstoffe sowie Anwendungspotenziale in den Bereichen Gas-Trennung, Sensorik und Katalyse (Mueller, U.; Schubert, M.; Teich, F.; Puetter, H.; Schierle-Arndt, K; Pastre, J. J. Mater. Chem. 2006, 16, 626-636).

Metall-organische Gerüstverbindungen sind komplexe 2D- bzw. 3-D-Zeolithähnliche Netzwerke mit perfekter Translationssymmetrie. Basierend auf der Werner-Typ-Koordinationschemie bestehen metallorganische Gerüstverbindungen aus Metallkationen N^{m+} (n = 2,3) und oligofunktionalisierten organischen Liganden. Das Design und die präzise Steuerung der Bildung der jeweiligen Netzwerke wurden in der Literatur wiederholt beschrieben und untersucht (G. Ferey, Chem. Soc. Rev., 2008, 37, 191-214; O.M. Yaghi, M. O'Keeffe, N. W. Ockwig, H.K. Chae, M. Eddaoudi and J. Kim, Nature, 2003, 423, 705; K. Uemura, R. Matsuda and S. Kitagawa, J. Solid State Chem., 2005, 178, 2420-2429).

Die Herstellung pulverförmiger MOFs ist Stand der Technik, die dabei erzeugten Partikel sind jedoch aus einem Verbund ungeordneter MOF-Kristallite aufgebaut und besitzen keine sich über das Partikel erstreckende geordnete Kristallstruktur. Die Herstellung pulverförmiger MOFs erfolgt gewöhnlich durch Ausfällung aus einer übersättigten Mischung der Precursorsubstanzen. Aufgrund der geringen Porengröße von MOF-Strukturen und der daraus resultierenden geringen Diffusivitäten von Substanzen innerhalb von MOFs sind hierbei in der Regel Partikel mit geringer Größe (z.B. wenige Mikrometer) vorteilhaft. Die technische Anwendung entsprechender Mikropartikel ist jedoch aufgrund des in durchströmten Schüttungen auftretenden hohen Druckverlusts schwierig. Einen Ausweg bieten magnetische Partikel, die in Form von Dispersionen eingesetzt und danach rasch über Magnetseparation abgetrennt werden können

Die Herstellung superparamagnetischer MOF-Hybridmaterialien wurde vor kurzem erstmals von Lohe et al. beschrieben (Lohe, M.R.; Gedrich, K.; Freudenberg, T.; Kockrick, E.; Dellmann, T.; Kaskel, S. Chem. Commun., 2011, 47, 3075-3077). In dem Artikel beschreiben die Autoren die Synthese verschiedener MOF-Hybridmaterialien durch eine konventionelle solvothermale MOF-Synthese in Dimethylformamid (DMF) bei hohen Temperaturen (>100°C) und in Anwesenheit von nanokristallinem Magnetit mittels Ko-Präzipitation. Der nanokristalline Magnetit wird dabei mechanisch in die sich bildenden polykristallinen MOF-Strukturen eingeschlossen und verleiht diesen dadurch magnetische Eigenschaften. Die berichteten Magnetitgehalte erreichen dabei Werte von 5 bis maximal 15 Gew.-%. Neben dem relativ geringen Magnetitgehalt besitzt diese Methode aber auch weitere Nachteile. Erstens ist die Verteilung des Magnetits innerhalb der Hybridmaterialien rein statistisch, d.h. es existieren Partikel mit viel bzw. wenig oder gar keinem magnetischen Anteil. Zweitens können Magnetit-Nanokristalle an der Oberfläche liegen oder durch Lücken innerhalb des polykristallinen MOFs für das Lösungsmittel leicht zugänglich sein. Und drittens besitzt die polykristallinen MOF-Partikel zwar die bekannten sehr hohen inneren Oberflächen, jedoch keine sich über das ganze Partikel erstreckende geordnete Kristallstruktur, wie sie für sich aktuell abzeichnende Anwendungen von MOFs in der Sensorik, als Elektrodenmaterial, etc. benötigt wird.
Derartige, großflächig bis auf atomarer Ebene geordnete MOF-Strukturen wurden weltweit erstmals in der Arbeitsgruppe von Herrn Prof. Wöll durch eine schrittweise Synthese nach dem "Lage für Lage"-Verfahren (LbL - layer-by-layer) erreicht (Step-by-Step Route for the Synthesis of Metal-Organic Frameworks, Wöll, J. Am. Soc. 2007, 129, 15118-15119). Hierzu wird auf einer glatten Metall-Oberfläche zunächst eine selbstordnende Monolage (SAM) mit funktionellen Gruppen zur koordinativen Bindung des Metallions des MOFs erzeugt. Anschließend erfolgt ein abwechselndes Überspülen der Oberfläche mit Lösungen, die das Metallion bzw. das Ligandenmolekül des MOFs enthalten. Hierdurch kommt es zu einem kontrollierten und selektiven Wachstum eines MOF-Films auf der gesamten Metalloberfläche. Durch den Einsatz von Stempeltechniken zum Aufbringen der SAM lässt sich auch das aufwachsende MOF strukturieren. Bis jetzt beschränkt sich das beschriebene Verfahren aber auf glatte Metalloberflächen, so dass z.B. die pro Masse Verbundmaterial generierte MOF-Fläche stark limitiert bleibt.

Aus Shekhah, Osama et al, "Step-by-step route for synthesis of metal-organic frameworks", J. Am. Chem. Soc. 2007, 129, 15118 - 15119 und Osama Shekhah, "Layer-by-Layer Method for the Synthesis and Growth of Surface Mounted Metal-Organic Frameworks (SURMOFs)", Materials, 2010, 3, 1302 - 1315 sind layer-by-layer Verfahren bekannt, bei denen Materialien beschichtet werden, die spezifische Oberflächen von wenigen cm²/g aufweisen. Eine Beschichtung von nano- oder mikropartikulären Materialien wird darin nicht behandelt.

Guang Lu et al. ("Fabrication of Metal-Organic Framework-Containing Silica-Colloidal Crystals for Vapor Sensing", Advanced Materials, 2011, 23, 4449-4452) beschreiben die Kombination von MOFs mit kolloidalen Kristallen zur Signaltransduktion als Antwort auf die Sorption durch das MOF. HKUST-1 (Cu₂(BTC)₃) wird hierzu auf einem kolloidalen Kieselsäurekristall wachsen gelassen. Der erhaltene Kristall antwortet schnell und reversibel auf Dampf oder Gasmoleküle, die durch die MOF-Komponente adsorbiert werden.

Die Patentanmeldung WO 2011/133999 A1 beschreibt Kristallisationshilfsmittel für die Synthese metallorganischer Gerüste, ein Verfahren zur Synthese metallorganischer Gerüste unter Verwendung dieser Kristallisationshilfsmittel und das daraus gebildete metallorganische Gerüst.

### Aufgabe:

Aufgabe der vorliegenden Erfindung war es, ein Verfahren bereitzustellen, das es erlaubt dreidimensional geordnete, kristalline Strukturen, insbesondere MOFs, auf der Oberflächen magnetischer Nano- oder Mikropartikel zu erzeugen. Im Unterschied zu dem von Lohe beschriebenen polykristallinen Einschluss-Präzipitaten sollte die Generierung der MOF-Struktur auf den Nanooder Mikropartikeln streng kontrolliert durch einen LbL-Ansatz erfolgen. Neben der Synthese wesentlich definierterer MOF-Nano- bzw. Mikropartikel-Verbünde, sollte das neue Verfahren auch auf Lösungsmittel wie Dimethylformamid sowie stark erhöhte Temperaturen und Drücke verzichten. Ein entsprechendes Verfahren wäre eine nachhaltige Alternative zur Synthese dreidimensional geordneter, multifunktioneller Nano- bzw. Mikropartikel.

### Lösung:

Diese Aufgabe wird durch ein Verfahren zur Herstellung von Partikeln hochporöser Oberflächenbeschichtung umfassend die folgenden Verfahrensschritte oder bestehend aus den folgenden Verfahrensschritten in der angegebenen Reihenfolge:
i) Bereitstellen eines nanopartikulären oder mikropartikulären Materials tragend funktionelle Gruppen oder Bereitstellen und Beschichtung der Oberfläche(n) eines nanopartikulären oder mikropartikulären Materials mit funktionellen Gruppen tragenden Verbindungen,
ii) Einführen einer Abstandsgruppe durch Reaktion mit der funktionellen Gruppe aus Schritt i),
iii) nötigenfalls Aktivierung der Oberfläche(n) mit funktionellen Gruppen, die über Elektronendonorfunktion an ein Metallion koordinieren bzw. eine dative Bindung eingehen können, sofern die Abstandsgruppe in Schritt ii) nicht bereits eine solche Gruppe enthält,
iv) Kontaktieren der Partikel mit einer Lösung eines Metallkations,
v) Waschschritt zur Entfernung ungebundener Metallionen,
vi) Kontaktieren der Partikel mit einer Lösung eines organischen Ligandenmoleküls mit Elektronendonorfunktion,
vii) Waschschritt zur Entfernung ungebundener Ligandenmoleküle.
viii) Wiederholung der Schritte iv) - vii) bis eine Beschichtung der gewünschten Dicke auf der Partikeloberfläche erreicht ist,
   wobei die Partikel während des gesamten Verfahrens frei suspendiert sind, sowie die mittels dieses Verfahrens hergestellten Partikel und deren Verwendung gelöst.

### Begriffsdefinitionen:

Im Rahmen der vorliegenden Erfindung sind alle Mengenangaben, sofern nicht anders angegeben, als Gewichtsangaben zu verstehen.

Im Rahmen der vorliegenden Erfindung bedeutet der Begriff "Raumtemperatur" eine Temperatur von 16 bis 25°C. Temperaturangaben sind, soweit nicht anders angegeben, in Grad Celsius (°C).

Sofern nichts anderes angegeben wird, werden die angeführten Reaktionen bzw. Verfahrensschritte bei Normaldruck/Atmosphärendruck, d.h. bei 1013 mbar, durchgeführt.

Im Rahmen der vorliegenden Erfindung schließt die Formulierung "und/oder" sowohl jede beliebige als auch alle Kombinationen der in der jeweiligen Auflistung genannten Elemente ein.

Die Abkürzung "v/v" bedeutet im Rahmen der vorliegenden Erfindung "Volumen der betreffenden Komponente je Gesamtvolumen des Gemischs".

Im Rahmen der vorliegenden Erfindung umfasst der Begriff "nanopartikuläres Material" Material eines mittleren Teilchendurchmessers in einem Bereich von 5 nm bis 500 nm, besonders 50 nm bis 250 nm, insbesondere 75 nm bis 150 nm, insbesondere gemessen mittels Transmissionselektronenmikroskopie. Im Rahmen der vorliegenden Erfindung umfasst der Begriff "mikropartikuläres Material" Material eines mittleren Teilchendurchmessers in einem Bereich von 0,5 µm bis 200 µm, insbesondere 3 µm bis 90 µm, insbesondere gemessen mittels Transmissionselektronenmikroskopie. Diese Teilchen weisen im Rahmen der vorliegenden Erfindung spezifische Oberflächen im Bereich von 1 m²/g und höher auf (10000 cm²/g und höher).

### Detaillierte Beschreibung:

Im Unterschied zu dem Stand der Technik zur Herstellung magnetischer MOF-Hybridmaterialien beruht das erfindungsgemäße Verfahren auf einer neuartigen Kombination der gezielten chemischen Aktivierung der Oberfläche magnetischer Nano- bzw. Mikrokristalle mit einer modifizierten LbL-MOF-Synthese.

Im Unterschied zum Stand der Technik benötigt das Aufbringen der MOF-Schicht dabei keine SAMs auf Metalloberflächen als Startschicht.

Zudem sind gegenüber dem von Kreno (Kreno L.E., Hupp J.T., Van Duyne R.P. Anal. Chem. 2010, 82, 8042-8046) beschriebenen Vorgehen die Nano- bzw. Mikropartikel während des gesamten Verfahrens frei suspendiert und nicht auf einer Oberfläche fixiert. Hierdurch wird eine einheitliche Beschichtung der gesamten Partikeloberfläche erreicht, und die Partikel stehen nach Abschluss der Synthese als Dispersion zur Verfügung. Hierdurch ist für spätere Anwendungen eine einfache Dosierung und ein Einsatz in gerührten Reaktoren, Strömungsrohren etc. möglich.

Gegenstand der vorliegenden Erfindung ist demgemäß ein Verfahren zur Herstellung von Partikeln hochporöser Oberflächenbeschichtung umfassend die folgenden Verfahrensschritte oder bestehend aus den folgenden Verfahrensschritten in der angegebenen Reihenfolge:
i) Bereitstellen eines nanopartikulären oder mikropartikulären Materials tragend funktionelle Gruppen oder Bereitstellen und Beschichtung der Oberfläche(n) eines nanopartikulären oder mikropartikulären Materials mit funktionellen Gruppen tragenden Verbindungen,
ii) Einführen einer Abstandsgruppe durch Reaktion mit der funktionellen Gruppe aus Schritt i),
iii) nötigenfalls Aktivierung der Oberfläche(n) mit funktionellen Gruppen, die über Elektronendonorfunktion an ein Metallion koordinieren bzw. eine dative Bindung eingehen können, sofern die Abstandsgruppe in Schritt ii) nicht bereits eine solche Gruppe enthält,
iv) Kontaktieren der Partikel mit einer Lösung eines Metallkations,
v) Waschschritt zur Entfernung ungebundener Metallionen,
vi) Kontaktieren der Partikel mit einer Lösung eines organischen Ligandenmoleküls mit Elektronendonorfunktion,
vii) Waschschritt zur Entfernung ungebundener Ligandenmoleküle.
viii) Wiederholung der Schritte iv) - vii) bis eine Beschichtung der gewünschten Dicke auf der Partikeloberfläche erreicht ist,
   wobei die Partikel während des gesamten Verfahrens frei suspendiert sind.

Dabei ist Schritt viii) für den Fall, dass bereits bei einmaliger Ausführung der Schritte iv) bis vii) eine ausreichende Stärke der partikelumhüllenden MOF-Schicht erreicht ist, entbehrlich.
Bevorzugt ist es aber, die Schritte iv) bis vii) mehr als einmal durchzuführen.

Die Anzahl der Zyklen (Schritt iv bis vii) ist von der Art des gewünschten MOFs und der späteren Anwendung abhängig.

In bevorzugten Varianten der vorliegenden Erfindung werden die Schritte iv) bis vii) mindestens 20 mal, besonders bevorzugt mindestens 40 mal, insbesondere bevorzugt mindestens 60 mal, wiederholt.
Für nanopartikuläre Materialien werden die Schritte iv) bis vii) bevorzugt maximal 120 mal, besonders bevorzugt maximal 50 mal wiederholt; für mikropartikuläre Materialien werden die Schritte iv) bis vii) bevorzugt maximal 300 bis 500 mal wiederholt.

Im Rahmen der vorliegenden Erfindung können in Schritt i) jeweils entweder nanopartikuläre oder mikropartikuläre Ausgangsmaterialien eingesetzt werden. Selbstverständlich kann das erfindungsgemäße Verfahren auch auf nano- und mikropartikuläre Materialien getrennt voneinander angewandt werden und die Produkte dann, falls gewünscht, später vermischt werden; diese Variante ist demgemäß auch ein Gegenstand der vorliegenden Erfindung.

In einer Ausgestaltung der vorliegenden Erfindung ist es bevorzugt, mikropartikuläre Ausgangsmaterialien einzusetzen.

In einer Ausgestaltung der vorliegenden Erfindung ist es bevorzugt, nanopartikuläre Ausgangsmaterialien einzusetzen.

In einer Ausgestaltung der vorliegenden Erfindung ist es bevorzugt, nanopartikuläre oder mikropartikuläre Ausgangsmaterialien einzusetzen, die eine spezifische Oberfläche von 1 bis 100 m²/g, bevorzugt 5 bis 50 m²/g, insbesondere 10 bis 30 m²/g aufweisen.

Als nanopartikuläre oder mikropartikuläre Ausgangsmaterialien können im Rahmen der vorliegenden Erfindung prinzipiell alle nanopartikulären oder mikropartikulären Materialien eingesetzt werden, sofern sie funktionelle Gruppen tragen, über die Abstandsgruppen eingeführt werden können oder die durch Beschichtung so modifiziert werden können, dass sie dann solche funktionellen Gruppen tragen.
Beispiele für solche funktionellen Gruppen sind insbesondere -NH₂, -OH. Bevorzugt werden nanopartikuläre oder mikropartikuläre Partikel ausgewählt aus der Gruppe bestehend aus Eisenoxid, TiO₂, MnO₂, SiO₂, CoO, NiO, Au, AG, Pd und Gemischen davon ausgewählt.
Dabei ist es erfindungsgemäß vorteilhaft, wenn das nanopartikuläre oder mikropartikuläre Material magnetisierbar ist, d.h. ferro- oder ferrimagnetische Eigenschaften besitzt. Besonders vorteilhaft sind magnetische Verbindungen mit geringer Remanenz oder superparamagnetischen Eigenschaften, da hierdurch die Resuspendierung nach vorhergehenden Trennschritten erleichtert wird.

Ein Beispiel für ein nanopartikuläres oder mikropartikuläres Material, dass nicht unbedingt beschichtet werden muss, ist Silica, welches bereits -OH-Gruppen an seiner Oberfläche aufweist. Sollten die -OH-Gruppen nicht ausreichen, kann das Silica dennoch beschichtet werden, oder die Oberfläche anderweitig aktiviert werden.

In einer bevorzugten Variante ist das nanopartikuläre oder mikropartikuläre Material Magnetit, d.h. Eisenoxid, insbesondere bereits mit Silica behandeltes Magnetit.
Ein kommerziell erhältliches Beispiel ist MagPrep^{(R)} der Firma Merck, Darmstadt.

Das nanopartikuläre oder mikropartikuläre Material wird im Rahmen der vorliegenden Erfindung dann falls nötig beschichtet.
Besonders geeignet für die Beschichtung sind Silane.

Die Silane werden bevorzugt ausgewählt aus der Gruppe bestehend aus 3-Triethoxysilylpropylamin (APTES), 3-Glycidyloxypropyltrimethoxysilan (GLYMO), (3-Mercaptopropyl)trimethoxysilan, 3-(Trimethylsilylethynyl)pyridin, 3-(Trimethylsilyl)propargylalkohol, 3-Triethoxysilylpropylsuccinsäureanhydrid (TESPSA), 11-(Triethoxysilyl)undecanal und Gemischen davon.

Die Beschichtung erfolgt nach bekannten Methoden des Standes der Technik, bevorzugt durch Umsetzung des nanopartikulären oder mikropartikulären Materials mit funktionellem Silan in basischer Lösung bei Temperaturen zwischen 10 und 80°C, bevorzugt 20 und 50°C, insbesondere bei Raumtemperatur, unter Rühren.

In Schritt ii) wird im Rahmen der vorliegenden Erfindung eine Abstandsgruppe eingeführt durch Reaktion mit funktionellen Gruppen des beschichteten nanopartikulären oder mikropartikulären Materials.
Die Abstandsgruppen werden im Rahmen der vorliegenden Erfindung bevorzugt eingeführt durch Verbindungen ausgewählt aus der Gruppe bestehend aus Dialdehyden, Diaminen, Epoxiden, Mercaptoethanol und Gemischen davon.
Bevorzugte Beispiele einer erfindungsgemäßen Variante sind Glutardialdehyd und Hexamethylendiamin.
Ebenfalls einsetzbar sind andere funktionelle Linker.

Dabei ist die Auswahl abhängig von den funktionellen Gruppen aus Schritt i); in Schritt ii) werden demgemäß Verbindungen eingesetzt, die eine zu der funktionellen Gruppe aus Schritt i) komplementäre funktionelle Gruppe aufweisen.
Übersicht: Beispiele komplementärer funktioneller Gruppen

| | |
|---|---|
| -SH | -C(O)-OH |
| -NH₂ | -CHO, -COOH, -C(O)-O-C(O)- |
| -OH | -NCO, -NH₂ |
| -O-(CO)-NH-(CO)-NH₂ | -NH-C(O)-OR |
| -O-(CO)-NH₂ | -CH₂-OH, -CH₂-O-CH₃, -NH-C(O)-CH(-C(O)OR)₂), -NH-C(O)-NR¹R², >Si(OR)₂, Oxiran, cyclisches Carbonat |
| -C(O)-OH | O, Oxiran |
| -O-C(O)-CR=CH₂ | -OH |
| -O-CR=CH₂ | -NH₂, -C(O)-CH₂-C(O)-R, -CH=CH₂ |

Bevorzugt sind dabei die Paare -NH₂/-CHO und -NH₂/-COOH, insbesondere - NH₂/-CHO.

In einer erfindungsgemäßen Variante ist es von besonderem Vorteil wenn zur Einführung der Abstandsgruppe eine Verbindung eingesetzt wird, die zwei gleiche funktionelle Gruppen aufweist, wie Dialdehyde, Diamine, Dicarbonsäuren.

Insbesondere werden Dialdehyde eingesetzt.

Vorteilhafterweise erfolgt die Einführung durch Umsetzung in Lösung.
Für den Fall der Umsetzung von Aminogruppe der Beschichtung mit einer Aldehydverbindung erfolgt die Umsetzung in einer Variante in basischer Lösung bei Raumtemperatur.

In Schritt iii) erfolgt, falls die in Schritt ii) eingeführte funktionelle Gruppe nicht ausreichend ist bzw. falls eine andere gewünscht ist, die Aktivierung der Oberfläche durch chemische Umsetzung einer funktionellen Gruppe der in Schritt ii) aufgebrachten difunktionellen Verbindung, bevorzugt zu einer funktionellen Gruppe ausgewählt aus der Gruppe bestehend aus Carboxylgruppen, Hydroxylgruppen, Thiolgruppen, Epoxygruppen, Pyridingruppen und Gemischen davon, insbesondere Carboxylgruppen, Hydroxylgruppen und Pyridingruppen.
In einer Variante der vorliegenden Erfindung sind Carboxylgruppen bevorzugt.

In einer Variante der vorliegenden Erfindung werden in Schritt iii) die Aldehydgruppen der Abstandsgruppe zu Carboxylgruppen oxidiert, beispielsweise mittels Kaliumpermanganat bei leicht erhöhten Temperatur von 35 bis 50°C.

Im nächsten Schritt iv) werden die Partikel mit einer Lösung eines Metallkations kontaktiert.
Als Kationen kommen dabei alle komplexierbaren Kationen in Betracht. Bevorzugt werden die Kationen ausgewählt aus der Gruppe bestehend aus Kupferionen, Eisenionen, Zinkionen, Cobaltionen, Cadmiumionen, Chromionen, Manganionen, Silberionen, Goldionen, Platinionen, Europiumionen und Gemischen davon.
Besonders bevorzugt werden die Kationen ausgewählt aus der Gruppe bestehend aus Cu(II), Zn(II), Fe(II), Fe(III), Cr(III), Co(II), Mn(II), Mn(III) und Gemischen davon.
Insbesondere bevorzugt werden als Metallkation Cu²⁺ und/oder Zn²⁺ eingesetzt.

Die Metallionen werden dabei bevorzugt als Anionen ausgewählt aus der Gruppe bestehend aus Acetaten, Nitraten, Imidazolaten, Sulfaten und Gemischen davon eingesetzt.
Besonders bevorzugt sind Acetate der Metallionen.

Insbesondere bevorzugt werden Kupfer(II)-acetat und/oder Zink(II)-acetat eingesetzt.

Die Verbindungen der Metallkationen liegen vorzugsweise als Lösungen vor. Als Lösemittel kommt die gesamte Palette herkömmlicher Lösemittel, bevorzugt Ethanol in Betracht.
Wasser ist als Lösemittel einsetzbar aber im allgemeinen nicht bevorzugt.

In einer bevorzugten Variante wird Ethanol verwendet.

Im Schritt vi) werden die Partikel mit einer Lösung eines organischen Ligandenmoleküls mit Elektronendonorfunktion kontaktiert.

Bevorzugt werden die organischen Ligandenmoleküle ausgewählt aus der Gruppe bestehend aus 1,3,5-Benzoltricarbonsäure (btc), Biphenyl-4,4'-Dicarbonsäure (bpdc), 1,4-Benzoldicarboxylsäure (bdc), 1,4-Naphtalindicarboxylsäure (1,4 ndc), Dimethyl-2,6-naphthalindicarboxylat (2,6 ndc), 4,4'-Bipyridin (bpy), 1,4-Diazo-bycyclo[2.2.2]oktan (dabco), 4,5,9,10-Tetrahydropyren-2,7-dicarboxylat (hpdc), Terphenyl-4,4'-dicarbonsäure (tpdc), Biphenyl-3,3',5,5'-Tetracarboxylat (bptc), (+)-Camphersäure (H₂cam) und Gemischen davon.
Besonders bevorzugt ist Benzoltricarbonsäure.

Die Ligandenverbindungen liegen vorzugsweise als Lösungen vor. Als Lösemittel kommt die gesamte Palette herkömmlicher Lösemittel, bevorzugt Ethanol, in Betracht.
Wasser ist als Lösemittel einsetzbar aber im allgemeinen nicht bevorzugt.
In einer bevorzugten Variante wird Ethanol verwendet.

In einer bevorzugten Variante der vorliegenden Erfindung wird in den Schritten iv) und vi) das gleiche Lösemittel verwendet.

In einer bevorzugten Variante finden die Inkubationsschritte iv) und vi) jeweils in einem Ultraschallbad oder unter einer Durchmischung in einem magnetischen Wechselfeld statt.

In bevorzugten Varianten der vorliegenden Erfindung beträgt die Reaktionszeit der Kontaktierung der Partikel mit den Lösungen der Metallkationen bzw. Ligandenmoleküle in den Schritten iv) und vi) unabhängig voneinander zwischen 10 s und 10 min, bevorzugt zwischen 30 s und 2 min.

Bei den Waschschritten v) und vii) wird im Rahmen der vorliegenden Erfindung bevorzugt als Waschmedium Ethanol eingesetzt.
Wasser ist als Lösemittel einsetzbar aber im allgemeinen nicht bevorzugt.

In einer bevorzugten Variante finden die Waschschritte jeweils in einem Ultraschallbad statt.

In einer bevorzugten Variante der vorliegenden Erfindung sind die nanopartikulären oder mikropartikulären Material magnetisch und in den Waschschritten v) und/oder vii) erfolgt eine temporäre Fixierung der Partikel zur Durchführung der Lösungswechsel über magnetische Separation.
Dies hat den Vorteil, dass sehr einfach und mit einfachen Mitteln eine gute Trennung erfolgen kann.

In einer bevorzugten Variante wird in den Schritten iv), v), vi) und viii) das gleiche Lösemittel verwendet.

Im Rahmen der Schritte iv) und vi) können durch Zumischung weiterer Stoffe, bevorzugt ausgewählt aus der Gruppe bestehend aus Nanopartikeln einer Größe von 0,5 nm bis 5 nm (gemessen mittels Transmissionselektronenmikroskopie), Farbstoffen, Katalysatormolekülen, medizinischen Wirkstoffen und Gemischen davon, zu den Precursorlösungen diese während des MOF-Aufbaus in die strukturellen Hohlräume des Kristalls eingebaut und dort sterisch fixiert werden.

Die Durchführung des Verfahrens erfordert dabei keine besonderen Reaktionsgefäße hinsichtlich ihrer Temperatur- oder Druckbeständigkeit.
Für die benötigten Partikelseparations- und Waschvorgänge zwischen den Arbeitsschritten bietet sich jedoch die Verwendung einer magnetischen Separationsvorrichtung an, da hierdurch eine rasche und effiziente Abtrennung erreicht werden kann. Zur Durchführung des Verfahrens eignen sich aber auch andere Separationstechnologien, wie z.B. Zentrifugen.
Aufgrund der Reaktionsführung in Suspension ist das Verfahren leicht skalierund kontrollierbar.

Es ist wichtig zu beachten, dass während des gesamten Verfahrens die MOFbildenden Precursorlösungen niemals zusammen mit der Partikeloberfläche in Kontakt treten, d.h. dass die Metallkationen niemals gleichzeitig zusammen mit dem organischen Ligand in einer Lösung/Suspension vorliegen dürfen. Hierdurch wird eine spontane MOF-Bildung in der Lösung ausgeschlossen, die zu einem Gemisch magnetischer und unmagnetischer Partikel führen würde. Ein Kontakt der Precursorlösungen wird durch die Waschschritte v) und vii) erreicht, wobei jeder dieser Waschschritte aus einem zwei bis dreimaligen Austausch der Waschlösung unter temporärer Fixierung der Partikel über Filter oder bevorzugt Magnetseparation besteht.
Durch die Waschschritte wird vermieden, dass die Precursorlösungen in gegenseitigen Kontakt kommen.

Ein weiterer entscheidender Vorteil des beschriebenen Verfahrens ist die Möglichkeit MOF-Coatings mit modularem Aufbau zu erzeugen. Denkbar ist z.B. der Aufbau eines MOF-Coatings, das aus 20 Zyklen Cu₃btc₂ gefolgt von 40 Zyklen Zn₃btc₂ besteht. Zudem ist es möglich, bereits während des Aufbaus der MOF-Lagen die entstehenden Kavitäten mit Molekülen zu füllen, denen aufgrund ihrer Größe ein Eindringen in die Poren fertiger MOF-Partikel nicht möglich ist. Durch den schichtweisen Aufbau lässt sich somit eine Flexibilität und genaue Strukturierung der MOF-Beschichtung von Partikeln erreichen, wie sie mit dem konventionellen Ansatz von Lohe et al. unmöglich ist.

Gegenstand der vorliegenden Erfindung in einer bevorzugten Ausgestaltung ist ein Verfahren zur Herstellung magnetischer Partikel mit MOF-Beschichtung umfassend die folgenden Verfahrensschritte oder bestehend aus den folgenden Verfahrensschritten in der angegebenen Reihenfolge:
a) Beschichtung der Oberfläche eines nano- oder mikropartikulären Eisenoxids mit funktionellen Silanen
b) Einführen einer Spacergruppe
c) Aktivierung der Oberfläche mit Carboxylgruppen
d) Einbringen des Metallkations für den gewünschten MOF-Typus
e) Waschschritt zur Entfernung ungebundener Metallkationen
f) Einbringen des organischen Ligandens des gewünschten MOF-Typus
g) Waschschritt zur Entfernung ungebundener Liganden
h) Wiederholung von Schritt d) bis g) bis die gewünschte Stärke der partikelumhüllenden MOF-Schicht erreicht ist.

Dabei ist Schritt h) für den Fall, dass bereits bei einmaliger Ausführung der Schritte d) bis g) eine ausreichende Stärke der partikelumhüllenden MOF-Schicht erreicht ist, entbehrlich.
Bevorzugt ist es aber, die Schritte d) bis g) mehr als einmal durchzuführen.
In bevorzugten Varianten der vorliegenden Erfindung werden die Schritte d) bis g) mindestens 20 mal, besonders bevorzugt mindestens 40 mal, insbesondere bevorzugt mindestens 60 mal, wiederholt.
Für nanopartikuläres Eisenoxid werden die Schritte iv) bis vii) bevorzugt maximal 120 mal, besonders bevorzugt maximal 50 mal wiederholt; für mikropartikuläres Eisenoxid werden die Schritte iv) bis vii) bevorzugt maximal 300 bis 500 mal wiederholt.

Weiterhin Gegenstand der vorliegenden Erfindung ist auch ein Verfahren zur Herstellung von Partikeln mit hochporöser Oberflächenbeschichtung aus umfassend die folgenden Verfahrensschritte oder bestehend aus den folgenden Verfahrensschritten in der angegebenen Reihenfolge:
i) Bereitstellen eines nanopartikulären oder mikropartikulären Materials oder Bereitstellen eines Gemisches von nanopartikulären und mikropartikulären Materialien und Beschichtung der Oberfläche(n) mit funktionellen Gruppen tragenden Verbindungen,
ii) Einführen einer Abstandsgruppe durch Reaktion mit der funktionellen Gruppe aus Schritt i),
iii) nötigenfalls Aktivierung der Oberfläche(n) mit funktionellen Gruppen, die über Elektronendonorfunktion an ein Metallion koordinieren bzw. eine dative Bindung eingehen können, sofern die Abstandsgruppe in Schritt ii) nicht bereits eine solche Gruppe enthält,
iv) Kontaktieren der Partikel mit einer Lösung eines Metallkations,
v) Waschschritt zur Entfernung ungebundener Metallionen,
vi) Kontaktieren der Partikel mit einer Lösung eines organischen Ligandenmoleküls mit Elektronendonorfunktion,
vii) Waschschritt zur Entfernung ungebundener Ligandenmoleküle.
viii) Wiederholung der Schritte iv) - vii) bis eine Beschichtung der gewünschten Dicke auf der Partikeloberfläche erreicht ist,
iv-2) Kontaktieren der Partikel mit einer Lösung eines anderen Metallkations,
v-2) Waschschritt zur Entfernung ungebundener Metallionen,
vi-2) Kontaktieren der Partikel mit einer Lösung eines anderen organischen
Ligandenmoleküls mit Elektronendonorfunktion,
vii-2) Waschschritt zur Entfernung ungebundener Ligandenmoleküle.
viii-2) Wiederholung der Schritte iv-2) - vii-2) bis eine Beschichtung der gewünschten Dicke auf der Partikeloberfläche erreicht ist.

In gleicher Art können im Rahmen der vorliegenden Erfindung drei oder noch mehr verschiedene MetaII/Ligand-Gruppen aufgetragen werden, indem dann die Schritte iv-n) bis viii-n) nach Schritt viii-2) ausgeführt werden, wobei n für die entsprechende Generation an weiterem MetaII/Ligand steht.

Selbstverständlich ist es auch möglich verschiedene MetalI/Ligand-Kombinationen zu alternieren, wie z.B. schematisch M/L-1+++M/L-2+++M/L-1+++M/L-2... oder ähnlich.

In der Fachwelt bestand das Vorurteil, dass vielstufige Beschichtungsverfahren schlecht auf Nanopartikelsuspensionen anzuwenden sind, da die notwendige vielfache Fest-Flüssigtrennung als sehr aufwändig angesehen wurde.
Vorteil der vorliegenden Erfindung ist jedoch, dass sich entgegen dieses Vorurteils mit dem erfindungsgemäßen Verfahren, insbesondere für die bevorzugte Ausführungsform der Verwendung magnetischer Nanopartikel, aber eine schnelle und skalierbare Handhabung der Partikel erreichen lässt.

Die verschiedenen Ausgestaltungen der vorliegenden Erfindung, z.B. aber nicht ausschließlich diejenigen der verschiedenen abhängigen Ansprüche, können dabei in beliebiger Art und Weise miteinander kombiniert werden.

### Figurenbeschreibung:

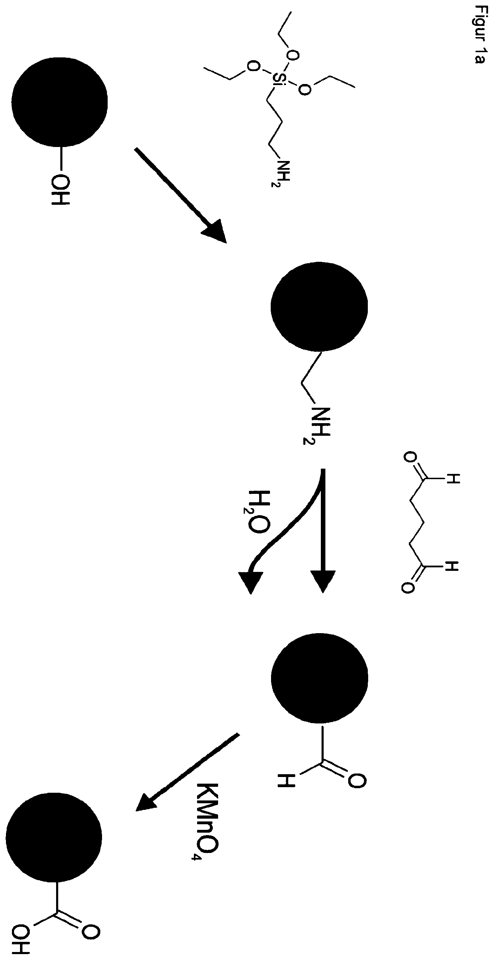

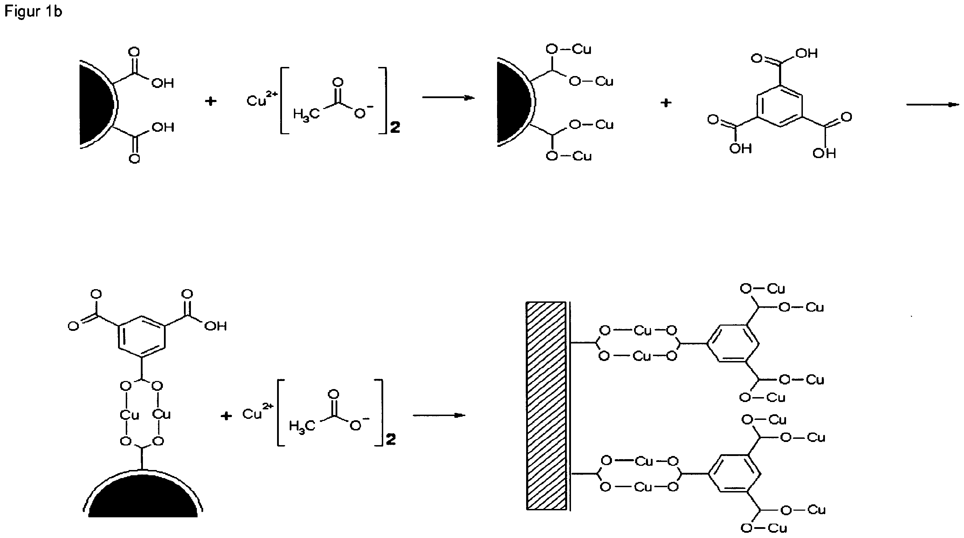

Figur 1 illustriert eine bevorzugte Variante des erfindungsgemäßen Verfahrens.
Figur 1a illustriert die erfindungsgemäßen Verfahrensschritte i), ii) und iii) am Beispiel eines Silica-beschichteten Magnetit Partikels, welcher
   Schritt i) mit APTES umgesetzt wird,
   Schritt ii) die Aminogruppen mit Glutaraldehyd umgesetzt werden und
   Schritt iii) anschließend die Aldehydgruppen zu Carboxylgruppen oxidiert werden.
Figur 1b illustriert die erfindungsgemäßen Verfahrensschritte iv) und vi) in Nachfolge zu den Schritten i) bis iii) aus Figur 1a, wobei in
   Schritt iv) die Carboxylgruppen mit Kupferacetat-Lösung kontaktiert werden und in
   Schritt vi) das Produkt mit Benzoltricarbonsäure umgesetzt wird (obere Zeile).
      Anschließend ist ein weiterer Schritt iv) und das daraus resultierende Ergebnis dargestellt (untere Zeile).
Figur 2 zeigt einen Vergleich der Röntgenstrukturanalysen von im obereren Teil nach konventionellem Verfahren synthetisierten, unmagnetischen [Cu₃(btc)₂*xH₂O] HKUST-1 Partikeln (Chui, S.S.Y., et al. A Chemically Functionalizable Nanoporous Material [Cu3(TMA)2(H2O)3]n. Science, 1999. 283 (5405): p. 1148-1150.) und im unteren Teil der nach dem erfindungsgemäßen Verfahren synthetisierten, magnetischen Hybridmaterialien nach 60 Zyklen.
Figur 3 zeigt in den oberen Abbildungen (a) das Ausgangsmaterial, d.h. monokristalline Magnetitpartikel mit oktaedrischer Form.
   Die MOF-Beschichtung zeigt sich in den unteren Abbildungen (b) als die Partikel komplett umhüllende Schicht mit gleichmäßiger Dicke. Die Dicke der MOF-Beschichtung wird dabei durch die Anzahl der durchgeführten LbL-Zyklen bestimmt.

Neben der gleichmäßigen Beschichtung sind in der Abbildung auch kugelförmige Gebilde von ca. 10 nm Durchmesser zu erkennen, bei denen es sich um Artefakte der TEM-Messung handelt (Der Elektronenstrahl reduziert Kupferionen und es bilden sich kugelförmige Kupfer(0)-Cluster).

Die Erfindung wird nun unter Bezugnahme auf die folgenden nicht-limitierenden Beispiele erläutert.

### Beispiele:

### Beispiel 1:

### Synthese magnetischer Cu-btc (HKUST-1; HKUST = Hong-Kong University of Science and Technology) MOF-Hybridmaterialien

Als Ausgangspartikel wurden monokristalline Magnetitkristalle (Durchmesser 100 nm) mit Silica-Beschichtung von ca. 2 nm Stärke gewählt (MagPrep®, von Merck, Darmstadt). Die Sättigungsmagnetisierung dieser Partikeln beträgt 70 Am²/kg. Für die Einführung von Spacergruppen, die Aktivierung und das MOF-Coating dieser Nanokristalle wurden folgende Chemikalien verwendet: (APTES) 3-Triethoxysilylpropylamin CAS-Nr.: 919-30-2, Ammoniak Lösung 25% CAS-Nr.: 7664-41 -7; Natriumhydroxid CAS-Nr.: 1310-73-2; Glutaraldehyd CAS-Nr.: 111-30-8, Ethanol absolut zur Analyse EMSURE® CAS-Nr.: 64-17-5; Kaliumpermanganat CAS-Nr.: 7722-64-7, (btc) 1,3,5-Benzoltricarbonsäure CAS-Nr.: 554-95-0; Kupfer(II)-acetat CAS-Nr.: 6046-93-1 von Merck KGaA.

### Einführung der Spacergruppe und Aktivierung der Partikeloberfläche

Als erster Schritt zur Einführung einer Spacergruppe wurde die Partikeloberfläche zunächst mit einem funktionellen Silan (APTES) behandelt. Hierzu wurden 2 g MagPrep® Partikel in 100 ml einer 50% v/v Ethanol/Wasser Lösung suspensiert und 3 ml 25%ige Ammoniaklösung zugegeben. Anschließend wurden 8 ml 3-Triethoxysilylpropylamin in Intervallen von 20 Minuten mit jeweils 2 ml in die Suspension überführt. Anschließend wurde die Reaktion bei Raumtemperatur über einen Zeitraum von einer Stunde bei intensivem Schütteln fortgeführt. Die aminofunktionalisierten Magnetitkristallite wurden mit 10%ige Ethanol-Lösung und anschließen mit VE-Wasser mehrmals gewaschen.

Das Einführen einer Spacergruppe wurde durch die Reaktion zwischen den Aminogruppen der Partikeloberfläche und den Aldehydgruppen von Glutaraldehyd erreicht. Zu 100 mg aminofunktionalisierten Magnetitkristalliten wurden 100 ml 2% v/v Glutaraldehyd gegeben und mit 0,5 M NaOH-Lösung der pH-Wert auf 11 eingestellt. Die Spacerreaktion wurde für 1 Stunde bei Raumtemperatur und unter intensivem Schütteln durchgeführt. Anschließend wurden die Partikel mit VE-Wasser mehrmals gewaschen.

Die Aktivierung der Oberfläche mit Carboxylgruppen wurde durch die Oxidation der Aldehydgruppen mittels 100 ml einer 0,1 M KMnO₄ Lösung über 1 Stunde bei 40°C und Schütteln erreicht.

### Aufwachsen der MOF-Schicht im LbL-Verfahren

Cu₃(btc)₂ (HKUST-1) wurde auf die aktivierten Magnetitkristalle durch das vorgeschlagene Layer-by-Layer Verfahren aufgebracht. 2 mg der mit COOH-Gruppen aktivierten Magnetitpartikel wurden in 2 ml Eppendorf-Gefäß gebracht und mit Ethanol gewaschen. Anschließend wurden abwechselnd je 2 ml einer 1 mM Ethanollösung von Cu-(CH₃COO)₂*H₂O und 2 ml einer 1 mM Ethanollösung von Benzoltricarbonsäure (H₃btc) zugegeben und für 5 Minuten inkubiert. Nach jedem Schritt wurden die Partikel mittels eines Handmagnets vom Überstand abgetrennt und zweimal mit 2 ml Ethanol gewaschen. Die Inkubations- und Waschschritte fanden dabei jeweils in einem Ultraschallbad statt, so dass vollständige Durchmischung und schneller Massentransfer an der fest-flüssig-Phasengrenze gewährleistet waren.

### Ergebnisse:

Aus einem Vergleich der Peaks in Figur 2 ist klar erkennbar, dass es sich bei der auf den Partikeln aufgewachsenen Schicht um hochkristalline HKUST-1 Strukturen handelt. Lediglich der Peak bei 2 Theta = 18,3° resultiert aus der Anwesenheit von Magnetit als Kernmaterial.

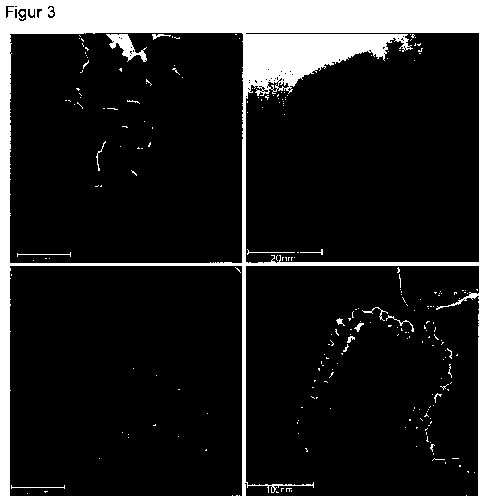

Einen genaueren Einblick in den Aufbau der Hybridpartikel erlauben Aufnahmen mittels Transmissionselektronenmikroskopie. Die oberen Abbildungen (a) in Figur 3 zeigen das Ausgangsmaterial, d.h. monokristalline Magnetitpartikel mit oktaedrischer Form.
Die MOF-Beschichtung zeigt sich in den unteren Abbildungen (b) als die Partikel komplett umhüllende Schicht mit gleichmäßiger Dicke. Die Dicke der MOF-Beschichtung wird dabei durch die Anzahl der durchgeführten LbL-Zyklen bestimmt.

## Patentansprüche

1. Verfahren zur Herstellung von Partikeln hochporöser Oberflächenbeschichtung umfassend die folgenden Verfahrensschritte in der angegebenen Reihenfolge:
i) Bereitstellen eines nanopartikulären oder mikropartikulären Materials tragend funktionelle Gruppen oder Bereitstellen und Beschichtung der Oberfläche(n) eines nanopartikulären oder mikropartikulären Materials mit funktionellen Gruppen tragenden Verbindungen,
ii) Einführen einer Abstandsgruppe durch Reaktion mit der funktionellen Gruppe aus Schritt i),
iii) nötigenfalls Aktivierung der Oberfläche(n) mit funktionellen Gruppen, die über Elektronendonorfunktion an ein Metallion koordinieren bzw. eine dative Bindung eingehen können, sofern die Abstandsgruppe in Schritt ii) nicht bereits eine solche Gruppe enthält,
iv) Kontaktieren der Partikel mit einer Lösung eines Metallkations,
v) Waschschritt zur Entfernung ungebundener Metallionen,
vi) Kontaktieren der Partikel mit einer Lösung eines organischen Ligandenmoleküls mit Elektronendonorfunktion,
vii) Waschschritt zur Entfernung ungebundener Ligandenmoleküle.
viii) Wiederholung der Schritte iv) - vii) bis eine Beschichtung der gewünschten Dicke auf der Partikeloberfläche erreicht ist,
wobei die Partikel während des gesamten Verfahrens frei suspendiert sind.

2. Verfahren nach Anspruch 1, **dadurch gekennzeichnet, dass** das nanopartikuläre oder mikropartikuläre Material ausgewählt wird aus der Gruppe bestehend aus Eisenoxid, TiO₂, MnO₂, SiO₂, CoO, NiO, Au, Ag, Pd und Gemischen davon.

3. Verfahren nach Anspruch 1, **dadurch gekennzeichnet, dass** das nanopartikuläre oder mikropartikuläre Material magnetisch ist, und bevorzugt ausgewählt wird aus der Gruppe bestehend aus Eisenoxid, Kupferoxid, Nickeloxid, Zinkoxid, Magnesiumoxid, Manganoxid und Gemischen davon, insbesondere bevorzugt Magnetit.

4. Verfahren nach Anspruch 3, **dadurch gekennzeichnet, dass** dasnanopartikuläre oder mikropartikuläre Material eine spezifische Oberfläche von 1 bis 100 m²/g, bevorzugt 5 bis 50 m²/g, insbesondere 10 bis 30 m²/g aufweist.

5. Verfahren nach Anspruch 1, **dadurch gekennzeichnet, dass** die funktionelle Gruppen tragenden Verbindungen in Schritt i) ausgewählt werden aus der Gruppe bestehend aus funktionellen Silanen.

6. Verfahren nach Anspruch 1, **dadurch gekennzeichnet, dass** die Abstandsgruppe in Schritt ii) durch difunktionelle Verbindungen eingeführt wird, bevorzugt ausgewählt aus der Gruppe bestehend aus Dialdehyden, Diaminen, Di- oder Polyepoxiden, Mercaptoethanol und Gemischen davon, insbesondere Dialdehyden.

7. Verfahren nach Anspruch 1, **dadurch gekennzeichnet, dass** die Aktivierung in Schritt iii) durch chemische Umsetzung einer funktionellen Gruppe der in Schritt ii) aufgebrachten difunktionellen Verbindung erfolgt, bevorzugt zu einer funktionellen Gruppe ausgewählt aus der Gruppe bestehend aus Carboxylgruppen, Hydroxylgruppen, Thiolgruppen, Epoxygruppen, Pyridingruppen und Gemischen davon, insbesondere Carboxylgruppen, Hydroxylgruppen und Pyridingruppen.

8. Verfahren nach Anspruch 1, **dadurch gekennzeichnet, dass** die Metallionen in Schritt iv) ausgewählt werden aus der Gruppe bestehend aus Kupferionen, Eisenionen, Zinkionen, Chromionen, Cobaltionen, Manganionen und Gemischen davon, bevorzugt ausgewählt aus der Gruppe bestehend aus Cu(II), Zn(II)und Fe(III), insbesondere Kupfer²⁺ und/oder Zn²⁺.

9. Verfahren nach Anspruch 1, **dadurch gekennzeichnet, dass** das organische Ligandenmolekül ausgewählt wird aus der Gruppe bestehend aus 1,3,5-Benzoltricarbonsäure (btc), Biphenyl-4,4'-Dicarbonsäure (bpdc), 1,4-Benzoldicarboxylsäure (bdc), 1,4-Naphtalindicarboxylsäure (1,4 ndc), Dimethyl-2,6-naphthalindicarboxylat (2,6 ndc), 4,4'-Bipyridin (bpy), 1,4-Diazo-bycyclo[2.2.2]oktan (dabco), 4,5,9,10-Tetrahydropyren-2,7-dicarboxylat (hpdc), Terphenyl-4,4'-dicarbonsäure (tpdc), Biphenyl-3,3',5,5'-Tetracarboxylat (bptc), (+) Camphersäure (H₂cam) und Gemischen davon, insbesondere Benzoltricarbonsäure.

10. Verfahren nach Anspruch 1, **dadurch gekennzeichnet, dass** das nanopartikuläre oder mikropartikuläre Material magnetisch ist und in Schritten v) und/oder vii) eine temporäre Fixierung der Partikel zur Durchführung der Lösungswechsel über magnetische Separation erfolgt.

11. Verfahren nach Anspruch 1, **dadurch gekennzeichnet, dass** die Reaktionszeit der Kontaktierung der Partikel mit den Lösungen der Metallkationen bzw. Ligandenmoleküle in den Schritten iv) und vi) unabhängig voneinander zwischen 10 s und 10 min, bevorzugt zwischen 30 s und 2 min, beträgt.

12. Verfahren nach Anspruch 1 **dadurch gekennzeichnet, dass** die Schritte iv) und vi) mit Precursorlösungen für verschiedene, strukturverwandte MOF-Typen durchgeführt und so eine schichtweiser, modularer Aufbau der MOF-Beschichtung erreicht wird.

13. Verfahren nach Anspruch 1 **dadurch gekennzeichnet, dass** durch Zumischung weiterer Stoffe, bevorzugt ausgewählt aus der Gruppe bestehend aus Nanopartikeln einer Größe von 0,5 nm bis 5 nm, gemessen mittels Transmissionselektronenmikroskopie, Farbstoffen, Katalysatormolekülen, medizinischen Wirkstoffen und Gemischen davon, zu den Precursorlösungen diese während des MOF-Aufbaus in die strukturellen Hohlräume des Kristalls eingebaut und dort sterisch fixiert werden.

## Claims

1. A process for the preparation of particles of highly porous surface coating comprising the following steps in the given order:
i) providing a nanoparticulate or microparticulate material carrying functional groups or providing and coating of the surface(s) of a nanoparticulate or microparticulate material with compounds carrying functional groups,
ii) inserting a spacer group by reaction with the functional group of step i),
iii) if necessary, activation of the surface(s) with functional groups, which coordinate to a metal ion by electron donor function or which can form a dative bond, provided that the spacer group in step ii) does not already contain such a group,
iv) contacting the particles with a solution of a metal cation,
v) washing step for removing unbound metal ions,
vi) contacting the particles with a solution of an organic ligand molecule with electron donor function,
vii) washing step for removing unbound ligand molecules,
viii) repeating the steps iv) - vii) until a coating of the desired thickness on the particle surface is achieved,
the particles being freely suspended during the entire procedure.

2. Method according to claim 1, **characterized in that** the nanoparticulate or microparticulate material is chosen from the group consisting of iron oxide, TiO₂, MnO₂, SiO₂, CoO, NiO, Au, Ag, Pd and mixtures thereof.

3. Method according to claim 1, **characterized in that** the nanoparticulate or microparticulate material is magnetic and is preferably chosen from the group consisting of iron oxide, copper oxide, nickel oxide, zinc oxide, magnesium oxide, manganese oxide and mixtures thereof, particularly preferable magnetite.

4. Method according to claim 3, **characterized in that** the nanoparticulate or microparticulate material has a specific surface of from 1 to 100 m²/g, preferably 5 to 50 m²/g, in particular 10 to 30 m²/g .

5. Method according to claim 1, **characterized in that** the functional groups carrying compositions in step i) are chosen from the group consisting of functional silanes.

6. Method according to claim 1, **characterized in that** the spacer group in step ii) is inserted by difunctional compositions, preferably chosen from the group consisting of dialdehyds, diamines, di- or polyepoxides, mercaptoethanol und mixtures thereof, in particular dialdehydes.

7. Method according to claim 1, **characterized in that** the activation in step iii) is carried out by chemical reaction of a functional group of the difunctional compound applied in step ii), preferably to a functional group selected from the group consisting of carboxyl groups, hydroxyl groups, thiol groups, epoxy groups, pyridine groups and mixtures thereof, in particular carboxyl groups, hydroxyl groups and pyridine groups.

8. Method according to claim 1, **characterized in that** the metal ions in step iv) are selected from the group consisting of copper ions, iron ions, zinc ions, chromium ions, cobalt ions, manganese ions and mixtures thereof, preferably selected from the group consisting of Cu(II), Zn(II) and Fe(III), in particular copper²⁺ and/or Zn²⁺.

9. Method according to claim 1, **characterized in that** the organic ligand molecule is selected from the group consisting of 1,3,5-benzenetricarboxylic acid (btc), biphenyl-4,4'-dicarboxylic acid (bpdc), 1,4-benzenedicarboxylic acid (bdc), 1,4-naphtalenedicarboxylic acid (1,4 ndc), dimethyl-2,6-naphthalenedicarboxylate (2,6 ndc), 4,4'-bipyridine (bpy), 1,4-diazo-bycyclo[2.2.2] octane (dabco), 4,5,9,10-tetrahydropyrene-2,7-dicarboxylate (hpdc), terphenyl-4,4'-dicarboxylic acid (tpdc), biphenyl-3,3',5,5'-tetracarboxylate (bptc), (+) camphoric acid (H₂cam) and mixtures thereof, in particular benzenetricarboxylic acid.

10. Method according to claim 1, **characterized in that** the nanoparticulate or microparticulate material is magnetic and in steps v) and/or vii) a temporary fixation of the particles is carried out for the performance of the change of solution by magnetic separation.

11. Method according to claim 1, **characterized in that** the reaction time of the contacting of the particles with the solutions of the metal cations or ligand molecules in steps iv) and vi) independently from each other are between 0 s and 10 min, preferably between 30 s and 2 min.

12. Method according to claim 1, **characterized in that** steps iv) and vi) are performed with precursor solutions for various, structurally related MOF-types and so a stratified, modular structure of the MOF-coating is achieved.

13. Method according to claim 1, **characterized in that** by admixture of further substances, preferably selected from the group consisting of nanoparticles of a size of from 0,5 nm to 5 nm, as measured by transmission electron microscopy, dyes, catalyst molecules, medical agents and mixtures thereof, to the precursor solutions these are incorporated during the MOF-structure into the structural cavities of the crystal and are there fixed sterically.

## Revendications

1. Procédé de fabrication de particules avec un revêtement de surface très poreux comprenant des étapes de procédé suivantes dans l'ordre indiqué:
i) mettre à disposition d' un matériau nanoparticulaire ou microparticulaire comportant des groupes fonctionnels ou mettre à disposition et revêtement de/des surface(s) d'un matériau nanoparticulaire ou microparticulaire avec des compositions comportant des groupes fonctionnels,
ii) introduire un groupe espaceur par réaction avec le groupe fonctionnel de l'étape i),
iii) si nécessaire, activer la/les surface(s) avec des groupes fonctionnels, quels coordonnent à un ion métallique par fonction de donneur d'éléctrons, ou que peuvent former une liaison dative, pourvue que le groupe espaceur en étape ii) ne contient déjà un tel groupe,
iv) mettre en contact les particules avec une solution d'un cation métallique,
v) étape de lavage destiner à éloigner des ions métalliques non liés,
vi) mettre en contact les particules avec une solution d'un molécule de ligand oranique ayant une fonction de donneur d'électrons,
vii) étape de lavage pour éloigner des molécules non liés,
viii) répéter des étapes iv) - vii) jusqu'à ce qu'un revêtement d'une épaisseur souhaitée sur la surface des particules soit obtenu.
les particules étant librement suspendues pendant tout le procédé.

2. Procédé selon la revendication 1, **caractérisé en ce que** le matériau nanoparticulaire ou microparticulaire est chosi du groupe composé d'oxide de fer, TiO₂, MnO₂, SiO₂, CoO, NiO, Au, Ag, Pd et des mélanges de ceux-ci.

3. Procédé selon la revendication 1, **caractérisé en ce que** le matériau nanoparticulaire ou microparticulaire est magnétique, et choisi de préférence du groupe composé d'oxide de fer, d'oxide de cuivre,
d' oxide de nickel, d'oxide de zinc, d'oxide de magnésium, d'oxide de manganèse, et des mélanges de ceux-ci, particulièrement de préférence magnétite.

4. Procédé selon la revendication 3, **caractérisé en ce que** le matériau nanoparticulaire ou microparticulaire a une surface spécifique de 1 à 100 m²/g, de préférence 5 à 50 m²/g, en particulier 10 à 30 m²/g.

5. Procédé selon la revendication 1, **caractérisé en ce que** les groupes fonctionnels comportant des compositions en l'étape i) sont choisis du groupe composé des silanes fonctionnels.

6. Procédé selon la revendication 1, **caractérisé en ce que** le groupe espaceur en étape ii) est introduit par des compositions difonctionelles, de préférence choisis par des groupes composés des dialdéhydes, diamines, di- ou polyépoxides, mercaptoéthanole et des mélanges de ceux-ci, en particulier dialdéhydes.

7. Procédé selon la revendication 1, **caractérisé en ce que** l'activation en étape iii) est éffectuée par une réaction chimique d'un groupe fonctionel d'une composition difonctionelle appliqué en étape ii), de préférence à un groupe fonctionel, choisi du groupe composé des groupes carboxyles, des groupes hydroxyles, des groupes thioles, des groupes époxy, des groupes pyridines, et des mélanges de ceux-ci, en particulier des groupes carboxyles, des groupes hydroxyles et des groupes pyridines.

8. Procédé selon la revendication 1, **caractérisé en ce que** les ions métalliques en étape iv) sont choisis du groupe composé des ions de cuivre, des ions de fer, des ions de zinc, des ions de chrome, des ions de cobalt, des ions de manganèse et des mélanges de ceux-ci, de préférence choisis du groupe composé de Cu(II), Zn(II) et Fe(III), en particulier cuivre²⁺ et/ou Zn²⁺.

9. Procédé selon la revendication 1, **caractérisé en ce que** le molécule de ligand organique est choisi du groupe composé d'acide de 1,3,5-benzènetricarboxylique (btc), d'acide biphényle-4,4'-dicarboxylique (bpdc), 1,4-d'acide benzène -dicarboxylique (bdc), d'acide 1,4-naphtaline-dicarboxylique(1,4 ndc), diméthyle-2,6-naphthaline dicarboxylate (2,6 ndc), 4,4'-bipyridine (bpy), l'octane de 1,4-diazo-bycyclo[2.2.2] (dabco), 4,5,9,10-tetrahydropyrène-2,7-dicarboxylate (hpdc), d'acide terphényle-4,4'-dicarboxylique tpdc), biphényle-3,3',5,5'-tetracarboxylate (bptc), (+) d'acide camphorique (H₂cam) et des mélanges de ceux-ci, en particulier d' acide benzène-tricarboxylique.

10. Procédé selon la revendication 1, **caractérisé en ce que** le matériau nanoparticulaire ou microparticulaire est magnétique et en étapes v) et/ou vii) une fixation temporaire des particules est effectuée pour le changement de solution par séparation magnétique.

11. Procédé selon la revendication 1, **caractérisé en ce que** le temps de réaction du contact des particules avec des solutions des cations métalliques ou des molécules de ligand en étapes iv) et vi) est indépendent l'un de l'autre entre 10 s et 10 min, de préférence entre 30 s and 2 min.

12. Procédé selon la revendication 1, **caractérisé en ce que** les étapes iv) and vi) sont effectuées avec des solutions précurseur pour des types MOF différents, structurellement apparentés et ainsi une structure stratifiée, modulaire du revêtement MOF soit atteinte.

13. Procédé selon la revendication 1, **caractérisé en ce que** par mélanger d'autre substances, de préférence choisies du groupe composé des nanoparticules d'une taille de 0,5 nm à 5 nm, comme mesuré par transmission electron microscopie, des colorants, des molécules de catalyseurs, des agents médicaux et des mélanges de ceux-ci, aux solutions précurseur, pendant la structure de MOF ils sont incorporées dans les cavités structurelles du cristal et sont fixées là par une méthode stérique.
